# EUROPÄISCHE PATENTSCHRIFT

(11) **EP 3 343 301 B1**
(45) Veröffentlichungstag und Bekanntmachung des Hinweises auf die Patenterteilung: **12.12.2018**
(21) Anmeldenummer: 16207495.9
(22) Anmeldetag: 30.12.2016
(51) Int. Cl.: G05B 19/042, G05B 9/02

(54) **VERFAHREN ZUM PROGRAMMIEREN EINER SICHERHEITSSTEUERUNG**
METHOD FOR PROGRAMMING A SAFETY DEVICE
PROCÉDÉ DE PROGRAMMATION D'UNE COMMANDE DE SÉCURITÉ

(43) Veröffentlichungstag der Anmeldung: 04.07.2018
(73) Patentinhaber: Wieland Electric GmbH, 96052 Bamberg (DE)
(72) Erfinder: LUDVIK, Marco, 91325 Adelsdorf (DE)
(74) Vertreter: 2K Patentanwälte Blasberg Kewitz & Reichel

(56) Entgegenhaltungen:
- EP-A1- 2 098 928
- EP-B1- 2 012 201

## Beschreibung

Die Erfindung betrifft ein Verfahren zum Programmieren einer Sicherheitssteuerung, ausgelegt zum gemäß einer Sicherheitsvorschrift sicheren Ein- und Ausschalten eines elektrischen Verbrauchers, wobei eine Programmieroberfläche auf einem Bildschirm dargestellt wird, in einem ersten Teilbereich der Programmieroberfläche eine Mehrzahl von Geber- und/oder Aktorsymbolen dargestellt wird, die jeweils einem Geber- oder Aktortyp zugeordnet sind, ein Geber- oder Aktorsymbol ausgewählt wird, eine Instanz des ausgewählten Geber- oder Aktorsymbols in einen zweiten Teilbereich der Programmieroberfläche verschoben und dort verankert wird, wobei in dem zweiten Teilbereich bereits ausgewählte Instanzen von Geber- und Aktorsymbolen anhand eines Logikschaltbildes logisch verknüpft werden.

Sicherheitssteuerungen werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Schaltausgänge der Sicherheitssteuerung gesteuert, die zur Erfüllung der einschlägigen Sicherheitsvorschriften, z.B. der Norm EN ISO 13849, ausgelegt sind. Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitssteuerungen weisen üblicherweise eine Anzahl von Klemmen zum Anschluss der Arbeitskontakte von Gebern und Aktoren auf. Geber sind z.B. Not-Aus-Schalter oder Positions- oder Stellungsüberwachungen wie z.B. eine Schutztür, eine Lichtschranke, eine Schaltmatte etc. Sie dienen zur Ermittlung eines sicherheitsrelevanten Zustandes. Aktoren sind z.B. Relais, Schütze etc., mit denen - wie oben erläutert - der elektrische Verbraucher geschaltet wird. Die Geber haben dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn der Geber nicht mehr in der Position "sicher" ist. Darüber hinaus kann es aber auch weitere Geber geben, wie z.B. Nachlaufüberwachungen, die Zusatzinformationen zur Bestimmung einer nicht sicheren Situation oder sonstige Diagnoseinformationen liefern.

Sicherheitssteuerungen sind häufig auch modular aufgebaut, so dass mehrere, unterschiedlich geartete Gebertypen angeschlossen werden können. Weiterhin können so auch mehrere elektrische Verbraucher mit unterschiedlichen Aktortypen gezielt angesteuert werden. Bei derartigen größeren Sicherheitssteuerungen, seien sie nun modular oder nicht-modular aufgebaut, ist eine Programmierung allein anhand von manuellen Einstellschaltern nicht mehr praktikabel. Daher wird hier häufig auf eine Programmierung auf einer Programmieroberfläche eines Bildschirms eines digitalen Computers zurückgegriffen, wie sie beispielsweise auch aus dem Bereich der Speicherprogrammierbaren Steuerungen (SPS) bekannt ist.

Auf einer derartigen Programmieroberfläche werden dem Benutzer üblicherweise die möglichen Geber- und Aktortypen anhand entsprechender Symbole dargestellt, so dass er die real vorhandenen und benötigten Geber und Aktoren hier auswählen kann. Dabei müssen im Rahmen der Programmierung notwendigerweise für jeden ausgewählten Aktor oder Geber zwei Informationen festgelegt bzw. vom Benutzer eingegeben werden, nämlich erstens, an welche Klemmen der Sicherheitssteuerung der jeweilige Aktor oder Geber angeschlossen ist, und zweitens, wie die jeweiligen Geber und Aktoren logisch miteinander verknüpft sind, d.h. z.B. welche Lichtschrankenunterbrechung in welchem Maschinenzustand welchen Verbraucher abschaltet. Hierbei ist es gerade im Bereich von Sicherheitssteuerungen immens wichtig, dass die Eingabe für den Benutzer transparent und möglichst fehlerunanfällig ist, da Verwechslungen oder Falschzuordnungen unter Umständen fatale Folgen haben können.

In der in der EP 1362269 B1 offenbarten Programmieroberfläche wird in einem linken Teilbereich eine Mehrzahl von Geber- und/oder Aktorsymbolen dargestellt, die jeweils einem Geber- oder Aktortyp zugeordnet sind. Instanzen, d.h. Repräsentationen dieser Geber oder Aktoren können vom Benutzer ausgewählt werden und werden dann in einen rechten Teilbereich der Programmieroberfläche verschoben und dort verankert. In dem rechten Teilbereich werden die Geber- und Aktorsymbole anhand eines Logikschaltbildes logisch verknüpft. Die Zuordnung zu den Klemmen der Steuerung wird hier im Bereich des Logikschaltbildes an den Geber- und Aktorsymbolen angezeigt. Wie die Auswahl der Klemmen stattfindet, ist nicht offenbart.

Die EP 2012201 B1 und die EP 2098928 A1 adressieren dieses Problem und schlagen vor, die Zuordnung der Geber und Aktoren zu Klemmen von der Logikprogrammierung zu trennen und in einer separaten Oberfläche vorzunehmen, in der ein physikalisches Abbild der Sicherheitssteuerung mit ihren Klemmen dargestellt ist. Damit kann die Klemmenzuordnung zwar komfortabel und transparent erfolgen, problematisch ist hierbei jedoch die fehlende Verknüpfung von hardwareseitiger Ansicht und Logikprogrammierung. Diese sind nämlich auf unterschiedlichen Bildschirmseiten dargestellt, was eine zusätzliche Fehlerquelle darstellen kann.

Es ist daher Aufgabe der Erfindung, ein Verfahren zur Programmierung einer Sicherheitssteuerung der eingangs genannten Art anzugeben, welches Klemmenzuordnung und Logikverknüpfung von Gebern und Aktoren auf möglichst fehlervermeidende und damit sichere Weise ermöglicht.

Diese Aufgabe wird erfindungsgemäß dadurch gelöst, dass in einem dritten Teilbereich der Programmieroberfläche Klemmenbezeichnungen von Klemmen der Sicherheitssteuerung mit ihnen jeweils zugeordneten Belegungsbereichen dargestellt werden, die Instanz des ausgewählten Geber- oder Aktorsymbols vor dem Verschieben in den zweiten Teilbereich über einen der Belegungsbereiche verschoben wird, und eine Information erzeugt wird, dass ein dem ausgewählten Geber- oder Aktorsymbol zugeordneter Geber- oder Aktortyp an die dem einen der Belegungsbereiche zugeordneten Klemme angeschlossen ist.

Die Erfindung geht dabei von der Überlegung aus, dass eine besonders sichere und fehlervermeidende Programmierung von Klemmenzuordnung und Logikverknüpfung insbesondere dann möglich wäre, wenn beide Festlegungen in einem Schritt mit für den Programmierer klar ersichtlichem Zusammenhang getroffen werden könnten. Daher sollte in Abkehr von jüngeren Entwicklungen die Festlegung beider Informationen auf einer Bildschirmseite, d.h. einer gemeinsamen Oberfläche erfolgen. Hierbei sollte für den Programmierer ersichtlich sein, welche Klemmen verfügbar und belegt oder unbelegt sind. Dazu werden in einem dritten Teilbereich der Programmieroberfläche Klemmenbezeichnungen von Klemmen der Sicherheitssteuerung mit ihnen jeweils zugeordneten Belegungsbereichen dargestellt. Um für den Programmierer die größtmögliche Transparenz und damit die größtmögliche Eindeutigkeit bezüglich Geber- oder Aktorsymbolen in der Logikprogrammierung und in der Klemmenzuordnung zu erzielen, sollte die Dateneingabe einschrittig erfolgen, d.h. idealerweise innerhalb derselben Bewegung. Hierzu wird die Instanz des ausgewählten Geber- oder Aktorsymbols vor dem Verschieben in den zweiten Teilbereich über einen der Belegungsbereiche verschoben und eine Information erzeugt, dass der dem ausgewählten Geber- oder Aktorsymbol zugeordnete Geber- oder Aktortyp an die dem einen der Belegungsbereiche zugeordneten Klemme angeschlossen ist. Nach dieser Bewegung über den Belegungsbereich mit Festlegung der Klemmenbelegung erfolgt dann die Weiterbewegung der Instanz in den Bereich der Logikverknüpfung, wodurch ein unmittelbarer Zusammenhang zwischen Klemmenbelegung und logischer Verknüpfung bei gleichzeitig völlig flexibler und einfach einzugebender Festlegung erreicht wird. Die erzeugte Information bezüglich der Klemmenbelegung, die dann z.B. in Form eines entsprechenden Datensatzes vorliegt, kann im weiteren Prozess der Programmierung verwendet werden.

In vorteilhafter Ausgestaltung des Verfahrens wird der Instanz des Geber- oder Aktorsymbols ein eindeutiger Instanzidentifikator zugewiesen und die erzeugte Information enthält weiterhin den eindeutigen Instanzidentifikator. Zwar ist durch die einheitliche Bewegung der Instanz über den Belegungsbereich in den Bereich der Logikprogrammierung bereits eine eindeutige, klar erkennbare Verbindung hergestellt. Auch über die schon festgelegten Klemmen ist ein Geber oder Aktor bereits eindeutig identifiziert. Durch einen zusätzlichen, eindeutigen Identifikator kann aber insbesondere bei mehrfacher Verwendung des gleichen Aktor- oder Gebertyps die Wahrscheinlichkeit von Verwechslungen noch weiter reduziert werden. Der Identifikator kann z.B. alphanumerisch sein und so mit der Information hinterlegt werden.

Um die Transparenz für den Benutzer noch weiter zu erhöhen, wird der Instanzidentifikator vorteilhafterweise auf der Instanz in der Programmieroberfläche dargestellt. Mit anderen Worten: Nachdem die Instanz nach der Auswahl den Identifikator erhält, wird die z.B. alphanumerische Identifizierung auf der Instanz dargestellt, z.B. "Not-Aus zweikanalig 13", wobei "13" der Identifikator wäre. Die Identifikation kann aber z.B. auch durch eine unterschiedliche Einfärbung gleicher Geber- oder Aktortypen erfolgen.

In besonders vorteilhafter Ausgestaltung des Verfahrens wird die Information nach einer vorgegebenen Verweildauer der Instanz des ausgewählten Geber- oder Aktorsymbols über dem einen der Belegungsbereiche erzeugt. D.h., dass zur Erzeugung der Klemmenverbindung keine gesonderte Aktion wie z.B. ein Mausklick erforderlich ist, sondern ein bloßes Verweilen über dem Belegungsbereich ausreicht. Die Verknüpfung erfolgt also durch einen sogenannten "Mouseover". Als Dauer ist eine Zahl im niedrigen einstelligen Sekundenbereich von Vorteil, nach deren Ablauf die Information erzeugt wird.

In weiterer vorteilhafter Ausgestaltung des Verfahrens wird eine Repräsentation der Instanz in dem einen der Belegungsbereiche verankert. Mit anderen Worten: Beim Bewegen der Instanz über den Bewegungsbereich wird in dem Belegungsbereich eine Repräsentation der Instanz, d.h. eine Abbildung, vorteilhafterweise ein 1:1-Abbild der Instanz hinterlegt. Dadurch ist die Zuordnung für den Benutzer auch im weiteren Verlauf eindeutig erkennbar und zudem werden freie und belegte Klemmen in der Folge eindeutig identifiziert.

Die Repräsentation der Instanz wird dabei vorteilhafterweise nach der vorgegebenen Verweildauer in dem einen der Belegungsbereiche verankert. Die Erzeugung der Information fällt dann zeitlich mit der Verankerung der Repräsentation zusammen.

In vorteilhafter Ausgestalltung bietet die Bedienoberfläche einen vollständigen Überblick über sämtliche belegbaren Klemmen der gesamten Steuerung, d.h. vorteilhafterweise werden die Klemmenbezeichnungen aller mit Gebern oder Aktoren belegbaren Klemmen im dritten Teilbereich dargestellt.

Die Klemmenbezeichnungen sind dabei aus Gründen der Übersichtlichkeit vorteilhafterweise alphanumerisch sortiert, d.h. beispielsweise anhand fortlaufender Nummern.

Ist die Sicherheitssteuerung modular aufgebaut, sind die Klemmenbezeichnungen und jeweils zugeordneten Belegungsbereiche vorteilhafterweise nach Modulen der Sicherheitssteuerung gruppiert, d.h. Klemmen jeweils eines Moduls werden gruppert dargestellt.

Einige Geber und Aktoren, insbesondere solche, die aus Gründen der eingangs genannten Redundanz zweikanalig ausgebildet sind, müssen mehreren Klemmen zugeordnet werden. Zur eindeutigen Zuordnung der Klemmen wird bei derartigen Gebern und Aktoren die Instanz des ausgewählten Geber- oder Aktorsymbols vor dem Verschieben in den zweiten Teilbereich über mehrere der Belegungsbereiche verschoben, und eine Information erzeugt, dass der dem ausgewählten Geber- oder Aktorsymbol zugeordnete Geber- oder Aktortyp an die den mehreren der Belegungsbereiche jeweils zugeordneten Klemmen angeschlossen ist.

Vorteilhafterweise werden die mehreren Belegungsbereiche in einem solchen Fall vereinigt und die Repräsentation der Instanz in der Vereinigung der mehreren Belegungsbereiche verankert. Hierfür sollten die jeweiligen Belegungsbereiche nebeneinander angeordnet sein, so dass eine Vereinigung einfach darstellbar ist.

Zur weiteren Verdeutlichung der Verbindung wird weiterhin vorteilhafterweise ein Verbindungssymbol dargestellt, welches die verankerte Repräsentation der Instanz mit der dem einen der Belegungsbereiche zugeordeneten Klemmenbezeichnung verbindet. Ein solches Verbindungssymbol kann z.B. eine einfache Linie sein.

Handelt es sich bei dem Geber oder Aktor wie oben dargestellt um einen solchen, der mit mehreren Klemmen verbunden werden muss, deren Belegungsbereiche vereinigt werden, werden vorteilhafterweise mehrere Verbindungssymbole dargestellt, welche die Repräsentation der Instanz mit jeder der den vereinigten Belegungsbereichen zugeordneten Anschlussklemmen verbinden.

Ein Computerprogrammprodukt, welches direkt in den internen Speicher eines digitalen Computers mit einem Bildschirm geladen werden kann, umfasst vorteilhafterweise Softwarecodeabschnitte, die, wenn sie auf dem Computer ausgeführt werden, den Computer zum Ausführen eines der oben beschriebenen Verfahren ertüchtigen, wobei die Programmieroberfläche auf dem Bildschirm des Computers angezeigt wird. Ein derartiges Computerprogrammprodukt ist eine Programmiersoftware, die mittels der Hardware des Computers wie Bildschirm und Schnittstellen wie z.B. Tastatur und Maus oder eines Touchscreens die Erstellung einer Programmierung mittels der beschriebenen graphischen Repräsentation von Klemmen der Sicherheitssteuerung ermöglicht und entsprechende Werkzeuge zur Erstellung logischer Verknüpfungen zur Verfügung stellt.

Vorteilhafterweise ist ein derartiges Computerprogrammprodukt in den internen Speicher eines digitalen Computers geladen. Ein derartiger Computer kann ein üblicher Personal Computer sein, bei einer entsprechenden Schnittstelle ist es aber auch denkbar, eine derartige Software auch für Tablets oder sogar Smartphones anzupassen. Auch sonstige proprietäre Systeme können mit einer entsprechenden Software ausgestattet sein. Alle diese Systeme sind unter dem Begriff digitaler Computer zusammengefasst.

Ein Computerprogrammprodukt, welches direkt in den internen Speicher einer Sicherheitssteuerung geladen werden kann, umfasst vorteilhafterweise Softwarecodeabschnitte, die mittels des beschriebenen Verfahrens erstellt wurden. Hierbei wird die mittels der Software für den digitalen Computer erstellte Programmierung in den Speicher der Sicherheitssteuerung geladen, so dass diese unabhängig und autark lauffähig ist.

Eine Sicherheitssteuerung, ausgelegt zum gemäß einer Sicherheitsvorschrift sicheren Ein- und Ausschalten eines elektrischen Verbrauchers, ist vorteilhafterweise mit dem beschriebenen Verfahren programmiert.

Die mit der Erfindung erzielten Vorteile bestehen insbesondere darin, dass durch eine einschrittige Eingabe von Klemmenzuordnung und Logikverknüpfung im Rahmen der Programmierung einer Sicherheitssteuerung Fehler vermieden werden und so die Sicherheit des programmierten Systems erhöht wird. Die Zuordnung ist für den Anwender besonders transparent und zu jedem Zeitpunkt eindeutig nachvollziehbar.

Ausführungsbeispiele der Erfindung werden anhand von Zeichnungen näher erläutert. Darin zeigen:
- FIG 1: eine schematische Darstellung einer Sicherheitssteuerung,
- FIG 2: eine schematische Darstellung der Sicherheitssteuerung in einer Betriebsart mit einem redundanten Schalter,
- FIG 3: eine schematische Darstellung der Sicherheitssteuerung mit einem zur Programmierung ausgerüsteten digitalen Computer,
- FIG 4-7: schematische Darstellungen einer Programmieroberfläche in verschiedenen Stadien eines Programmierverfahrens

Gleiche Teile sind in allen Zeichnungen mit denselben Bezugszeichen versehen.

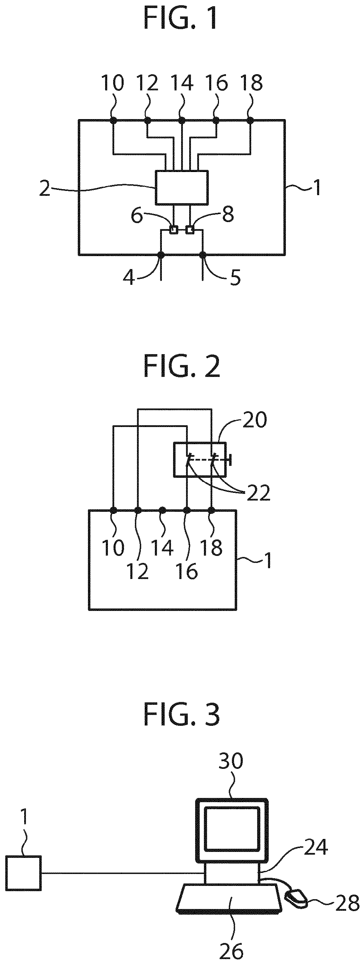

Die FIG 1 zeigt eine Sicherheitssteuerung 1 mit einer zentralen Steuereinheit 2. Die Sicherheitssteuerung 1 ist gemäß der Norm EN ISO 13849 ausgestaltet, so das die Steuereinheit 2 zwei redundant arbeitende Mikrocontroller umfasst. Die Sicherheitssteuerung 1 hat zwei Klemmen 4, 5, die in die Stromzufuhr zu einem nicht näher gezeigten Aktor geschaltet sind, der einen elektrischen Verbraucher schaltet, der Gefahrenpotential aufweist und daher sicher ausgeschaltet werden soll. Dazu sind in die Verbindung zwischen den Schaltausgängen 4 zwei Relais 6, 8 in Reihe geschaltet. Um den Stromfluss zu erhalten, müssen beide Relais 6, 8 im geschlossenen Zustand sein, sie sind also redundant. Die Relais 6, 8 werden von den redundanten Mikrocontrollern der Steuereinheit 2 unabhängig gesteuert.

Um die Funktion des elektrischen Verbrauchers im Gefahrenfall zu unterbrechen oder zumindest zu beeinflussen, sind verschiedene, beispielhaft in der folgenden FIG 2, jedoch nicht in der FIG 1 gezeigte Geber an die Sicherheitssteuerung 1 anschließbar. Diese können z.B. Not-Aus-Schalter, Lichtschranken, Türpositionsschalter etc. sein. Zum Anschluss dieser Geber weist die Sicherheitssteuerung 1 fünf weitere Klemmen 10, 12, 14, 16, 18 auf. An den Klemmen 10, 12 liegt im Ausführungsbeispiel stets eine kleine positive Gleichspannung an, dies ist jedoch nicht zwingend, z.B. bei sog. Open-Collector oder Tri State-Ausgängen.

Alternativ können an den Klemmen 10, 12 auch Prüfsignale mit zyklischen, pulsartigen Prüfpulsen zur Leitungs- und Kurzschlussprüfung vorgesehen sein, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Alle Klemmen 4, 5, 10, 12, 14, 16, 18 können beliebig, z.B. als Schraub- oder Federklemmen ausgestaltet sein.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 außer der Klemmen 10, 12, 14, 16, 18 verzichtet.

FIG 2 zeigt einen Not-Aus-Schalter 20, der zwei redundante Kanäle mit zwei mechanisch verbundenen Schaltern 22 umfasst. Die Schalter 22 sind äquivalent, d.h. beide im Gutzustand geschlossen und im Zustand der Anforderung der Sicherheitsfunktion geöffnet. Hier ist der Not-Aus-Schalter 20 derart mit dem Sicherheitssteuerung 1 verbunden, dass Klemme 10 über den einen der Schalter 22 mit Klemme 16 verbunden ist, Klemme 12 über den anderen der Schalter 22 mit Klemme 18. Klemme 14 bleibt unbelegt. Auf den Klemmen 14, 16, 18 ergibt sich bei Freigabe somit die Signalkombination Null, Plus, Plus, im Zustand der Anforderung der Sicherheitsfunktion die Signalkombination Null, Null, Null. Andere Signalkombinationen deuten auf einen Fehler hin. In beiden letztgenannten Fällen wird eine Unterbrechung der Stromzufuhr zwischen den Klemmen 4 und 5 veranlasst.

Das Beispiel in den FIG 1 und 2 dient nur der Veranschaulichung der Funktionsweise der Sicherheitssteuerung 1 und ist daher stark vereinfacht. In der Realität wird das System weit komplexer sein, die Sicherheitssteuerung 1 kann modular aufgebaut sein, und es werden eine Vielzahl von Klemmen auf verschiedenen Modulen vorhanden sein, die eine Vielzahl von elektrischen Verbrauchern schalten können und an die eine Vielzahl von Gebern und Aktoren verschiedenster Art angeschlossen werden kann.

Die Klemmenbelegung und damit letztlich die an den Klemmen zu erwartenden Signalkombinationen sowie die logische Verknüpfung zwischen den Geber- und Aktorsignalen müssen in der Steuereinheit 2 der Sicherheitssteuerung 1 hinterlegt sein, so dass diese bei entsprechender Signalisierung die Abschaltung der richtigen elektrischen Verbraucher veranlasst. Dies geschieht durch Übergabe entsprechender Parameter, d.h. einer entsprechenden Konfiguration an ein in der Steuereinheit 2 hinterlegtes Computerprogramm (die Firmware).

Die Erstellung dieser Konfiguration erfolgt an einem digitalen Computer 24, der in FIG 3 gezeigt ist. Der Computer 24 weist Eingabegeräte wie eine Tastatur 26 und eine Maus 28 auf sowie einen Bildschirm 30 als Ausgabegerät. Über eine serielle oder parallele Schnittstelle oder z.B. über Ethernet ist er mit der Sicherheitssteuerung 1 verbunden. Auf dem Computer 24 wird durch einen Benutzer auf einer graphischen Programmieroberfläche anhand der angedachten Geber- und Aktorkombination sowie der gewünschten logischen Verknüpfung die Konfiguration erstellt, geprüft und anschließend in die Steuereinheit 2 der Sicherheitssteuerung 1 übertragen. In einer alternativen, nicht gezeigten Ausführungsform kann der digitale Computer 24 auch als Tablet mit Touchscreen ausgestaltet sein. Insofern im Folgenden im Ausführungsbeispiel von Mausklick oder Mausbewegung gesprochen wird, wäre dies im Falle eines Tablets durch Antippen und entsprechendes Ziehen des Fingers durchzuführen.

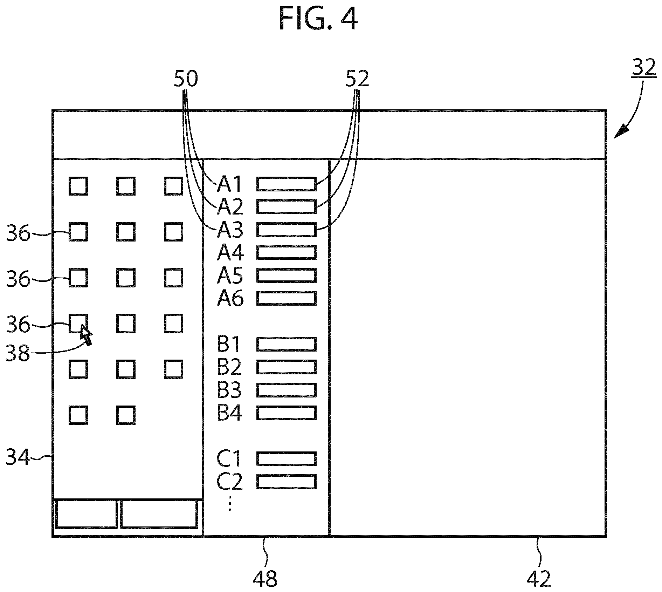

Eine solche, auf einem Bildschirm dargestellte Programmieroberfläche 32 ist in der FIG 4 gezeigt. Die Programmieroberfläche 32 weist einen ersten Teilbereich 34 auf, in dem Geber- und Aktorsymbole 36 dargestellt sind. Jedem Geber- oder Aktorsymbol 36 entspricht ein realer Geber oder Aktor, z.B. Not-Aus-Schalter einkanalig, Not-Aus-Schalter zweikanalig etc. In nicht gezeigten Ausführungsbeispielen können die Geber- und Aktorsymbole 36 nach inhaltlichen Kriterien gruppiert sein.

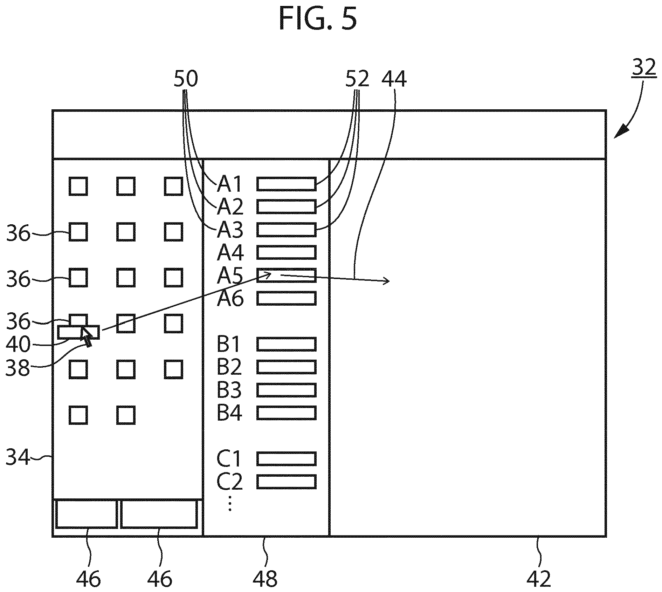

Der Benutzer wählt im Rahmen der Programmierung nun ein Geber- oder Aktorsymbol 36 aus, welches einem Geber oder Aktor entspricht, der in der späteren Anwendung der Sicherheitssteuerung 1 benötigt wird. Die Auswahl erfolgt durch Bewegen des Mauszeigers 38 auf das gewünschte Geber- oder Aktorsymbol 36 und einfachen Mausklick auf das jeweils gewünschte Geber- oder Aktorsymbol 36. Die Auswahl durch Mausklick führt dazu, dass eine Instanz 40 des Aktorsymbols 36 erzeugt wird, die an den Mauszeiger angeheftet wird, dargestellt in FIG 5.

Die Instanz 40 wird erzeugt, da mehrere gleichartige Geber bzw. Aktoren vorhanden sein können und daher ggf. mehrfach nacheinander das gleiche Geber- und Aktorsymbol 36 ausgewählt werden muss. Die Instanz 40 kann in ihrer Darstellung dabei identisch mit dem Geber- oder Aktorsymbol sein, muss dies aber nicht. Im Ausführungsbeispiel ist die Instanz 40 deutlich breiter und flacher als das Geber- oder Aktorsymbol 36, um ggf. Text auf ihr darzustellen. Enthält das Geber- oder Aktorsymbol 36 ein kennzeichnendes Piktogramm, so kann dieses Piktogramm in Ausführungsformen auch auf der Instanz 40, ggf. vergrößert oder verkleinert, dargestellt werden. Zur eindeutigen Identifizierung jeder Instanz 40 wird im Folgenden noch ausgeführt.

Die Instanz 40 repräsentiert nun einen real vorhandenen Geber oder Aktor des anhand des Geber- oder Aktorsymbols 36 ausgewählten Typs. Diesem Geber oder Aktor werden nun für die weitere Programmierung eine oder mehrere Klemmen zugewiesen werden, an die er an der realen Sicherheitssteuerung 1 angeschlossen wird, und es muss eine logische Verknüpfung dieses Gebers oder Aktors erfolgen. Beide Informationen sollen so eingegeben werden, dass die Gefahr von Vertauschungen und Falschbelegungen möglichst ausgeschlossen wird.

Für die Festlegung der logischen Verknüpfung dient ein in FIG 4 und 5 nicht näher dargestelltes, vom Programmierer mithilfe der Instanz 40 und weiterer Instanzen erstelltes Logikschaltbild in einem zweiten Teilbereich 42 der Programmieroberfläche 32. Im Logikschaltbild erfolgt die Programmierung anhand graphischer Symbole, die logisch verknüpft werden. Die Geber und Aktoren werden hier durch die Instanzen 40 graphisch repräsentiert, die nach der Auswahl und Erstellung in den zweiten Teilbereich 42 gezogen werden, dargestellt durch Pfeil 44 in FIG 5. Zusätzlich werden dem Benutzer logische Funktionsbausteine mit vordefinierten Funktionen bereitgestellt, die in die logische Verknüpfung eingeschaltet werden können. Dies können z.B. einfache logische Bausteine wie "UND" oder "ODER" sein, die aus zwei oder mehr binären Eingangswerten einen einzelnen Ausgangswert erzeugen, oder aber Funktionsbausteine mit hinterlegten Parameterwerten, die ein Eingangssignal anhand des jeweiligen Parameterwerts modifizieren oder auch ein vorbestimmtes Ausgangssignal anhand des Parameterwerts erzeugen. Derartige Symbole sind in FIG 4 und 5 nicht gezeigt, sie können im Ausführungsbeispiel ebenfalls im ersten Teilbereich ausgewählt werden, wo durch Reiter 46 zwischen auswählbaren Geber- und Aktorsymbolen 36 und auswählbaren Funktionsbausteinen hin- und hergeschaltet werden kann.

Durch einfaches Verbinden mit Linien können die Signale wie gewünscht weitergeleitet werden. Durch geschickte Kombination von Funktionsbausteinen und entsprechende Verbindung mit den Instanzen 40 wird somit die Schaltlogik definiert.

Damit - für größtmögliche Transparenz und Fehlervermeidung - im gleichen Schritt auch die Klemmenzuordnung des jeweiligen Geber oder Aktors festgelegt werden kann, wird die erzeugte Instanz 40 jedoch vor dem Verschieben in den zweiten Teilbereich 42 über einen dritten Teilbereich 48 bewegt. Der dritte Teilbereich ist zwischen dem ersten und zweiten Teilbereich 34, 42 angeordnet und enthält die Klemmenbezeichnungen 50 aller mit Gebern oder Aktoren belegbaren Klemmen der Sicherheitssteuerung 1. Diese sind nach Modulen der Sicherheitssteuerung 1 gruppiert ("A", "B", "C") und im Übrigen alphanumerisch sortiert ("A1", "A2", "A3",...; "B1", "B2",... etc.). Dadurch sind die Klemmen übersichtlich angeordnet.

Jeder der Klemmenbezeichnungen 50 ist jeweils ein Belegungsbereich 52 zugeordnet. Dieser ist z.B. durch eine Umrandung oder Schattierung auf der Programmieroberfläche 32 markiert. Im Ausführungsbeispiel ist der jeweils zugeordnete Belegungsbereich 52 in unmittelbarer Nähe, hier insbesondere rechts neben der Klemmenbezeichnung 50 angeordnet. Die Belegungsbereiche 52 dienen dazu, die jeweilige Instanz 40 (d.h. den dadurch repräsentierten Geber oder Aktor) einer Klemme zuzuordnen. Dies geschieht mittels Mouseover, d.h. wird die Instanz 40 für einen gegeben Zeitraum, hier z.B. 1 Sekunde, über einem Belegungsbereich 52 gehalten, wird die dem Belegungsbereich 52 zugeordnete Klemme mit der Instanz 40, d.h. dem von ihr repräsentierten Geber.

Im Ausführungsbeispiel soll der ausgewählte Geber oder Aktor an die Klemme "A5" angeschlossen werden. Dafür bewegt der Benutzer die Instanz 40 zunächst über den der Klemmenbezeichnung "A5" zugeordneten Belegungsbereich 52. Nach der vorgegebenen Zeit wird im Belegungsbereich 52 der Klemmenbezeichnung "A5" eine Repräsentation der Instanz 40 hinterlegt, wie im Folgenden noch gezeigt wird. Gleichzeitig wird eine Information hinterlegt, d.h. hier ein Datensatz in den später in die Sicherheitssteuerung 1 zu übertragenden Daten, dass ein dem ausgewählten Geber- oder Aktorsymbol 36 entsprechender Geber- oder Aktortyp an die Klemme "A5" angeschlossen ist. Erst nach dieser Erzeugung der Information wird die Instanz 40 in den zweiten Teilbereich 42 bewegt, dort verankert und später logisch verknüpft.

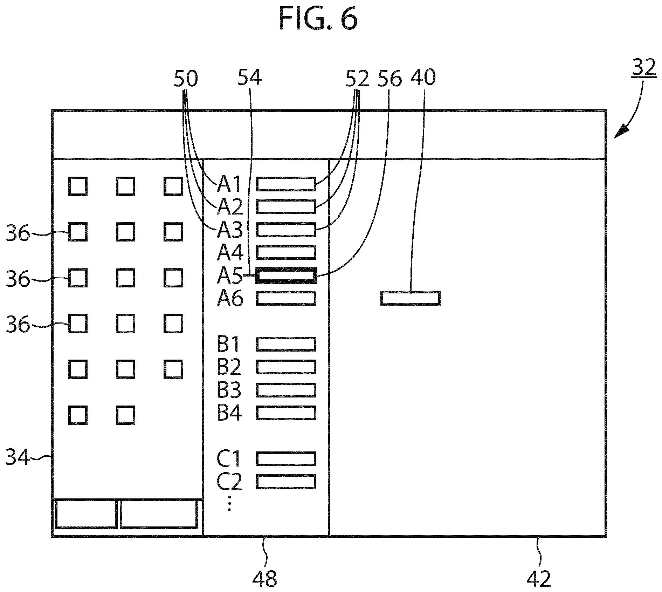

FIG 6 zeigt die Programmieroberfläche 32 nach Abschluss des Verfahrens. Im der Klemmenbezeichnung "A5" zugeordneten Belegungsbereich 52 ist, durch ein linienförmiges Verbindungssymbol mit der Klemmenbezeichnung "A5" verbunden, eine Repräsentation 56 der Instanz 40 verankert. Die Instanz 40 ist im zweiten Teilbereich 42 zur folgenden Logikverknüpfung verankert. Die Repräsentation 56 ist graphisch identisch zur Instanz 40.

Durch die einschrittige Zuordnung von Klemme und Logikverknüpfung ist eine unmittelbare Verbindung zwischen der Repräsentation 56 im dritten Teilbereich 48 und der verankerten Instanz 40 im zweiten Teilbereich 42 gegeben. Die Zuordnung kann je nach Ausführungsbeispiel im späteren Verlauf auf verschiedene Weisen verdeutlicht werden: In einem Ausführungsbeispiel kann auf der verankerten Instanz 40 im dritten Teilbereich 48 die jeweils verknüpfte Klemmenbezeichnung 50 angezeigt werden. Die graphische Darstellung der Repräsentation 56 muss diese dann nicht enthalten und ist insofern ggf. nicht exakt gleich zu der der verankerten Instanz 40.

In einem anderen Ausführungsbeispiel kann beim Erstellen der Instanz 40 durch Auswahl des Geber- oder Aktorsymbols 36 ein eindeutiger Instanzidentifikator zugewiesen werden, z.B. eine eindeutige Nummer. Dieser Instanzdentifikator wird dann zum einen auf der Instanz 40 und der Repräsentation 56 angezeigt, so dass eine eindeutige Zuordnung auch im Nachhinein erkennbar ist, andererseits wird dieser Instanzidentifikator auch mit der Information hinterlegt. Eine solche hinterlegte Information wäre dann im Beispiel die Zuordnung "Not-Aus" - "Identifikator 1" - "Klemme A5".

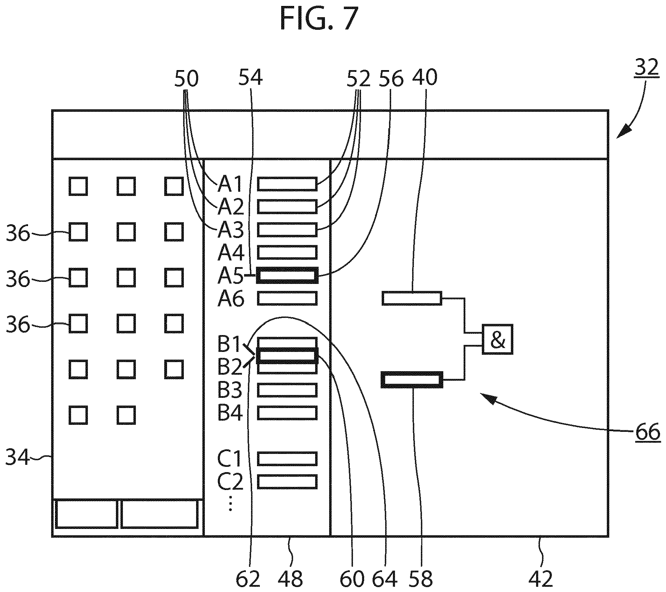

FIG 7 zeigt schließlich die Programmieroberfläche 32 zu einem späteren Zeitpunkt. Es wurde ein weiteres Geber- oder Aktorsymbol 36 ausgewählt. Hierbei handelte es sich um ein Geber- oder Aktorsymbol 36, dessen zugeordneter Geber- oder Aktortyp mit zwei Klemmen verbunden werden muss. Für einen solchen Fall wird die erzeugte Instanz 58 über zwei Belegungsbereiche 52, im Ausführungsbeispiel der FIG 7 über die nebeneinanderliegenden Belegungsbereich 52 der Klemmen "B1" und "B2" bewegt. Die Belegungsbereiche 52 der Klemmen "B1" und "B2" wurden in der graphischen Darstellung verbunden und mittig wurde die Repräsentation 60 verankert. Von der Repräsentation 60 aus führen die linienförmigen Verbindungssymbole 62, 64 zu den Klemmenbezeichnungen "B1" und "B2", um die Verbindung weiter zu verdeutlichen. Weiterhin wurde eine Information erzeugt, dass der der Instanz 58 zugeordnete Geber oder Aktor mit den Klemmen "B1" und "B2" verbunden ist.

Die Instanz 58 wurde anschließend im zweiten Teilbereich 42 verankert. Im zweiten Teilbereich 42 ist auch bereits der Beginn eines Logikschaltbildes 66 gezeigt. Die beiden Instanzen 40, 58 sind im Beispiel logisch durch einen "UND"-Funktionsblock 68 verknüpft.

Nach Abschluss der Klemmenbelegung und der Logikprogrammierung erstellt die Programmiersoftware, die auch die Darstellung der Programmieroberfläche 32 veranlasst, aus der graphischen Darstellung automatisch die Konfigurationsdaten, die die oben beschriebenen Informationen enthalten. Diese werden dann in die Sicherheitssteuerung 1 übertragen und von dieser während der Ausführung der dort hinterlegten Firmware interpretiert und verwendet. In anderen Ausführungen kann von der Programmiersoftware auch direkt eine entsprechend angepasste Firmware erstellt werden, die dann in die Sicherheitssteuerung 1 übertragen und dort ausgeführt wird.

### Bezugszeichenliste

- 1: Sicherheitssteuerung
- 2: Steuereinheit
- 4, 5: Klemme
- 6, 8: Relais
- 10, 12, 14, 16, 18: Klemme
- 20: Not-Aus-Schalter
- 22: Schalter
- 24: Computer
- 26: Tastatur
- 28: Maus
- 30: Bildschirm
- 32: Programmieroberfläche
- 34: erster Teilbereich
- 36: Geber-/Aktorsymbol
- 38: Mauszeiger
- 40: Instanz
- 42: zweiter Teilbereich
- 44: Pfeil
- 46: Reiter
- 48: dritter Teilbereich
- 50: Klemmenbezeichnung
- 52: Belegungsbereich
- 54: Verbindungssymbol
- 56: Repräsentation
- 58: Instanz
- 60: Repräsentation
- 62, 64: Verbindungssymbol
- 66: Logikschaltbild
- 68: Funktionsblock

## Patentansprüche

1. Verfahren zum Programmieren einer Sicherheitssteuerung (1), ausgelegt zum gemäß einer Sicherheitsvorschrift sicheren Ein- und Ausschalten eines elektrischen Verbrauchers, wobei
eine Programmieroberfläche (32) auf einem Bildschirm (30) dargestellt wird,
in einem ersten Teilbereich (34) der Programmieroberfläche (32) eine Mehrzahl von Geber- und/oder Aktorsymbolen (36) dargestellt wird, die jeweils einem Geber- oder Aktortyp zugeordnet sind,
ein Geber- oder Aktorsymbol (36) ausgewählt wird,
eine Instanz (40, 58) des Geber- oder Aktorsymbols (36) in einen zweiten Teilbereich (42) der Programmieroberfläche (32) verschoben und dort verankert wird,
wobei in dem zweiten Teilbereich (42) bereits ausgewählte Instanzen (40, 58) von Geber- und Aktorsymbolen (36) anhand eines Logikschaltbildes (66) logisch verknüpft werden,
**dadurch gekennzeichnet, dass**
in einem dritten Teilbereich (48) der Programmieroberfläche (32) Klemmenbezeichnungen (50) von Klemmen (4, 5, 10, 12, 14, 16, 18) der Sicherheitssteuerung (1) mit ihnen jeweils zugeordneten Belegungsbereichen (52) dargestellt werden,
die Instanz (40, 58) des ausgewählten Geber- oder Aktorsymbols (36) vor dem Verschieben in den zweiten Teilbereich (42) über einen der Belegungsbereiche (52) verschoben wird, und
eine Information erzeugt wird, dass ein dem ausgewählten Geber- oder Aktorsymbol (36) zugeordneter Geber- oder Aktortyp an die dem einen der Belegungsbereiche (52) zugeordnete Klemme (4, 5, 10, 12, 14, 16, 18) angeschlossen ist.

2. Verfahren nach Anspruch 1, bei dem der Instanz (40, 58) ein eindeutiger Instanzidentifikator zugewiesen wird und die Information weiterhin den eindeutigen Instanzidentifikator enthält.

3. Verfahren nach Anspruch 2, bei dem der Instanzidentifikator auf der Instanz (40, 58) in der Programmieroberfläche (32) dargestellt wird.

4. Verfahren nach einem der vorhergehenden Ansprüche, bei dem die Information nach einer vorgegebenen Verweildauer der Instanz (40, 58) des ausgewählten Geber- oder Aktorsymbols (36) über dem einen der Belegungsbereiche (52) erzeugt wird.

5. Verfahren nach einem der vorhergehenden Ansprüche, bei dem eine Repräsentation (56, 60) der Instanz (40, 58) in dem einen der Belegungsbereiche (52) verankert wird.

6. Verfahren nach einem der vorhergehenden Ansprüche bei dem die Repräsentation (56, 60) der Instanz (40, 58) nach der vorgegebenen Verweildauer in dem einen der Belegungsbereiche (52) verankert wird.

7. Verfahren nach einem der vorhergehenden Ansprüche, bei dem die Klemmenbezeichnungen (50) aller mit Gebern oder Aktoren belegbaren Klemmen (4, 5, 10, 12, 14, 16, 18) im dritten Teilbereich (58) dargestellt werden.

8. Verfahren nach einem der vorhergehenden Ansprüche, bei dem die Klemmenbezeichnungen (50) alphanumerisch sortiert sind.

9. Verfahren nach einem der vorhergehenden Ansprüche, bei dem die Sicherheitssteuerung (1) modular aufgebaut ist und die Klemmenbezeichnungen (50) und jeweils zugeordneten Belegungsbereiche (52) nach Modulen der Sicherheitssteuerung (1) gruppiert sind.

10. Verfahren nach einem der vorhergehenden Ansprüche, bei dem der dem ausgewählten Geber- oder Aktorsymbol (36) zugeordnete Geber- oder Aktortyp mehreren Klemmen (4, 5, 10, 12, 14, 16, 18) zugeordnet werden muss,
die Instanz (58) des ausgewählten Geber- oder Aktorsymbols (36) vor dem Verschieben in den zweiten Teilbereich (42) über mehrere der Belegungsbereiche (52) verschoben wird, und
eine Information erzeugt wird, dass ein dem ausgewählten Geber- oder Aktorsymbol (36) zugeordneter Geber- oder Aktortyp an den den mehreren der Belegungsbereiche (52) jeweils zugeordneten Klemmen (4, 5, 10, 12, 14, 16, 18) angeschlossen ist.

11. Verfahren nach einem der vorhergehenden Ansprüche bei dem die mehreren Belegungsbereiche (52) vereinigt werden und die Repräsentation (60) der Instanz (58) in der Vereinigung der mehreren Belegungsbereiche (52) verankert wird.

12. Verfahren nach einem der vorhergehenden Ansprüche bei dem ein Verbindungssymbol (54, 62, 64) dargestellt wird, welches die Repräsentation (56, 60) der Instanz (40, 58) mit der dem einen der Belegungsbereiche (52) zugeordeneten Klemmenbezeichnung (50) verbindet.

13. Verfahren nach einem der vorhergehenden Ansprüche bei dem mehrere Verbindungssymbole (62, 64) dargestellt werden, welche die Repräsentation (60) der Instanz (58) mit jeder der den vereinigten Belegungsbereichen (52) zugeordneten Klemmenbezeichnungen (50) verbinden.

14. Computerprogrammprodukt, welches direkt in den internen Speicher eines digitalen Computers (24) geladen werden kann und Softwarecodeabschnitte umfasst, die, wenn sie auf dem Computer (24) ausgeführt werden, den Computer (24) zum Ausführen des Verfahrens nach einem der vorhergehenden Ansprüche ertüchtigen.

15. Digitaler Computer (24), in dessen internen Speicher das Computerprogrammprodukt nach Anspruch 14 geladen ist.

16. Computerprogrammprodukt, welches direkt in den internen Speicher einer Sicherheitssteuerung (1) geladen werden kann und Softwarecodeabschnitte umfasst, die mittels des Verfahrens nach einem der Ansprüche 1 bis 13 erstellt wurden.

17. Sicherheitssteuerung (1), ausgelegt zum gemäß einer Sicherheitsvorschrift sicheren Ein- und Ausschalten eines elektrischen Verbrauchers, programmiert mit dem Verfahren nach einem der Ansprüche 1 bis 13.

## Claims

1. Method for programming a safety controller (1) designed to safely switch an electrical load on and off in accordance with a safety regulation, wherein
a programming interface (32) is displayed on a screen (30),
a plurality of encoder and/or actuator symbols (36) is displayed in a first sub-area (34) of the programming interface (32), each of which is assigned to an encoder or actuator type,
an encoder or actuator symbol (36) is selected,
an instance (40, 58) of the encoder or actuator symbol (36) is moved to a second sub-area (42) of the programming interface (32) and anchored there,
wherein in the second sub-area (32) already selected instances (40, 58) of encoder and actuator symbols (36) are logically linked by means of a logic diagram (66),
**characterized in that**
terminal designations (50) of terminals (4, 5, 10, 12, 14, 16, 18) of the safety controller (1) are displayed in a third sub-area (48) of the programming interface (32) together with their respectively assigned assignment areas (52),
the instance (40, 58) of the selected encoder or actuator symbol (36) is moved over one of the assignment areas (52) before being moved into the second sub-area (42), and
an information is generated that an encoder or actuator type assigned to the selected encoder or actuator symbol (36) is connected to the terminal (4, 5, 10, 12, 14, 16, 18) assigned to one of the assignment areas (52).

2. Method according to claim 1, in which the instance (40, 58) is assigned a unique instance identifier and the information further contains the unique instance identifier.

3. Method according to claim 2, in which the instance identifier is displayed on the instance (40, 58) in the programming interface (32).

4. Method according to one of the preceding claims, in which the information is generated after a predetermined retention time of the instance (40, 58) of the selected encoder or actuator symbol (36) above one of the assignment areas (52).

5. Method according to one of the preceding claims, in which a representation (56, 60) of the instance (40, 58) is anchored in one of the assignment areas (52).

6. Method according to one of the preceding claims, in which the representation (56, 60) of the instance (40, 58) is anchored in one of the assignment areas (52) after to the predetermined retention period.

7. Method according to one of the preceding claims, in which the terminal designations (50) of all terminals (4, 5, 10, 12, 14, 16, 18) which can be assigned to encoders or actuators are displayed in the third sub-area (58).

8. Method according to one of the preceding claims, in which the terminal designations (50) are sorted alphanumerically.

9. Method according to one of the preceding claims, in which the safety controller (1) has a modular structure and the terminal designations (50) and the respective assigned assignment areas (52) are grouped according to modules of the safety controller (1).

10. Method according to one of the preceding claims, in which the encoder or actuator type assigned to the selected encoder or actuator symbol (36) must be assigned to several terminals (4, 5, 10, 12, 14, 16, 18),
the instance (58) of the selected encoder or actuator symbol (36) is moved over several of the assignment areas (52) before being moved to the second sub-area (42), and
an information is generated that an encoder or actuator type assigned to the selected encoder or actuator symbol (36) is connected to the terminals (4, 5, 10, 12, 14, 16, 18) respectively assigned to the several of the assignment areas (52).

11. Method according to one of the preceding claims, in which the several assignment areas (52) are combined and the representation (60) of the instance (58) is anchored in the combination of the several assignment areas (52).

12. Method according to one of the preceding claims, in which a connection symbol (54, 62, 64) is displayed which connects the representation (56, 60) of the instance (40, 58) with the terminal designation (50) assigned to one of the assignment areas (52).

13. Method according to one of the preceding claims, in which a plurality of connection symbols (62, 64) are displayed which connect the representation (60) of the instance (58) to each of the terminal designations (50) assigned to the combined assignment regions (52).

14. Computer program product which can be loaded directly into the internal memory of a digital computer (24) and comprises software code sections which, when executed on the computer (24), enable the computer (24) to perform the method according to any of the preceding claims.

15. Digital computer (24) in whose internal memory the computer program product according to claim 14 is loaded.

16. Computer program product which can be loaded directly into the internal memory of a safety controller (1) and comprises software code sections created by the method according to any of claims 1 to 13.

17. Safety controller (1) designed to safely switch an electrical load on and off in accordance with a safety regulation, programmed with the method according to one of claims 1 to 13.

## Revendications

1. Un procédé de programmation d'un contrôleur de sécurité (1) conçu pour allumer et éteindre une charge électrique conformément à une réglementation de sécurité, dans lequel
une interface de programmation (32) est affichée sur un écran (30)
une pluralité de symboles de codeur et/ou d'actionneur (36) est affichée dans une première sous-région (34) de l'interface de programmation (32), chacune étant affecté à un type de codeur ou d'actionneur,
un symbole de codeur ou d'actionneur (36) est sélectionné,
une instance (40, 58) du symbole de codeur ou d'actionneur (36) est déplacée dans une seconde sous-région (42) de l'interface de programmation (32), et y est ancrée ; dans lequel, au sein de la seconde sous-région (32) les instances déjà sélectionnées (40, 58) de symboles de codeur ou d'actionneurs (36) sont liées logiquement au moyen d'un diagramme logique (66),
**caractérisé en ce que**
des désignations de bornes (50) des bornes (4, 5, 10, 12, 14, 16, 18) du contrôleur de sécurité (1) sont affichées dans une troisième sous-région (48) de l'interface de programmation (36) ensemble avec leurs zones d'affectation respectivement affectées (52),
l'instance (40, 58) du symbole de codeur ou d'actionneur (36) sélectionné est déplacé sur une des zones d'affectation (52) avant d'être déplacée dans la seconde sous-zone (42), et
une information est générée suivant laquelle un type de codeur ou d'actionneur affecté au symbole de codeur ou d'actionneur sélectionné (36) est connecté à la borne (4, 5, 10, 12, 14, 16, 18) affectée à une des zones d'affectation (52).

2. Le procédé selon la revendication 1, dans lequel un identifiant d'instance unique est attribué à l'instance (40, 58) et l'information comprend en outre l'identifiant d'instance unique.

3. Le procédé selon la revendication 2, dans lequel l'identificateur d'instance est présenté sur l'instance (40, 58) dans l'interface de programmation (32).

4. Le procédé selon l'une des revendications précédentes, dans lequel les informations sont générées après un temps de séjour prédéterminé de l'instance (40, 58) du symbole de codeur ou d'actionneur sélectionné (36) sur l'une des zones d'affectation (52).

5. Le procédé selon l'une des revendications précédentes, dans lequel une représentation (56, 60) de l'instance (40, 58) est ancrée dans l'une des zones d'affectation (52).

6. Le procédé selon l'une des revendications précédentes, dans lequel la représentation (56, 60) de l'instance (40, 58) est ancrée dans l'une des zones d'affectation (52) après le temps de séjour prédéterminé.

7. Le procédé selon l'une des revendications précédentes, dans lequel les désignations de bornes (50) de toutes les bornes (4, 5, 10, 12, 14, 16, 18) pouvant être affectées à des codeurs ou à des actionneurs sont représentées dans la troisième sous-zone (58).

8. Le procédé selon l'une des revendications précédentes, dans lequel les désignations de borne (50) sont triées par ordre alphanumérique.

9. Le procédé selon l'une des revendications précédentes, dans lequel le contrôleur de sécurité (1) a une structure modulaire et les désignations de borne (50) et les plages d'affectation respectivement affectées (52) sont regroupées en fonction des modules du contrôleur de sécurité (1).

10. Le procédé selon l'une des revendications précédentes, dans lequel le type de codeur ou d'actionneur affecté au symbole de codeur ou d'actionneur sélectionné (36) doit être affecté à plusieurs bornes (4, 5, 10, 12, 14, 16, 18), l'instance (58) du symbole de codeur ou d'actionneur sélectionné (36) est déplacé sur une pluralité de régions d'affectation (52) avant de passer dans la seconde sous-région (42), et une information est générée indiquant qu'un type de codeur ou d'actionneur affecté au symbole de donneur ou d'actionneur sélectionné (36) est connecté aux bornes (4, 5, 10, 12, 14, 16, 18) respectivement affectées à une pluralité de zones d'affectation (52).

11. Le procédé selon l'une des revendications précédentes, dans lequel la pluralité de zones d'affectation (52) est combinée et la représentation (60) de l'instance (58) est ancrée dans la combinaison de la pluralité de zones d'occupation (52).

12. Le procédé selon l'une des revendications précédentes, dans lequel un symbole de connexion (54, 62, 64) est affiché qui relie la représentation (56, 60) de l'instance (40, 58) à la désignation de la borne (50) affectée à une des zones d'affectation (52).

13. Le procédé selon une des revendications précédentes, dans lequel une pluralité de symboles de connexion (62, 64) sont présentés, connectant la représentation (60) de l'instance (58) à chacun des identificateurs de bornes (50) associés aux régions d'affectation combinées (52).

14. Un programme d'ordinateur pouvant être chargé directement dans la mémoire interne d'un ordinateur (24) et comprenant des parties de code informatique qui, lorsqu'il est exécuté sur l'ordinateur (24), permet à l'ordinateur (24) d'exécuter le procédé selon l'une quelconque des revendications précédentes.

15. Un ordinateur (24) dans la mémoire interne duquel le programme d'ordinateur de la revendication 14 est chargé.

16. Un programme informatique pouvant être chargé directement dans la mémoire interne d'un contrôleur de sécurité (1) et comprenant des parties de code informatique crées au moyen du procédé selon l'une des revendications 1 à 13.

17. Une contrôleur de sécurité (1) conçu pour effectuer en toute sécurité une mise en marche et un arrêt d'une charge électrique conformément à une réglementation de sécurité, programmé avec le procédé selon l'une des revendications 1 à 13.
